# EUROPÄISCHE PATENTSCHRIFT

(11) **EP 0 890 810 B1**
(45) Veröffentlichungstag und Bekanntmachung des Hinweises auf die Patenterteilung: **21.04.2004**
(21) Anmeldenummer: 98110733.7
(22) Anmeldetag: 12.06.1998
(51) Int. Cl.: F28D 1/02, F28F 3/04, F28F 1/04, F02M 31/20

(54) **Kraftfahrzeug mit Unterbodenwärmetauscher**
Automotive vehicle with heat exchanger under the floor
Véhicule automobile comprenant un échangeur de chaleur sous le plancher

(30) Priorität: 11.07.1997 DE 19729857
(43) Veröffentlichungstag der Anmeldung: 13.01.1999
(73) Patentinhaber: Volkswagen Aktiengesellschaft, 38436 Wolfsburg (DE)
(72) Erfinder: Ohlhoff, Jörg, Dipl.-Ing., 38442 Wolfsburg (DE); Dänekas, Gerfried, Dipl.-Ing., 38114 Braunschweig (DE)

(56) Entgegenhaltungen:
- EP-A- 0 807 756
- WO-A-94/23257
- DE-A- 3 800 296
- DE-A- 3 840 980
- DE-A- 19 505 641
- DE-A- 19 702 440
- PATENT ABSTRACTS OF JAPAN vol. 012, no. 272 (M-724), 28. Juli 1988 (1988-07-28) & JP 63 054590 A (SHOWA ALUM CORP), 8. März 1988 (1988-03-08)

## Beschreibung

Die Erfindung betrifft ein Kraftfahrzeug, insbesondere Personenkraftwagen, mit mindestens einem im Unterbodenbereich angeordneten Wärmetauscher gemäß den Merkmalen des Oberbegriffs des Anspruchs 1.

Aus der DE 43 39 936 A1 ist eine Anordnung eines Wärmetauschers im Unterbodenbereich eines Fahrzeuges zum Abführen der Motorwärme an die Umgebung bekannt. Diese Anordnung weist einen oberhalb des Unterbodens angeordneten schräg stehenden Kühler auf, dem Kühlluft durch unterhalb bzw. vor dem Kühler angeordnete Lufteintrittsöffnungen im Unterboden zugeführt wird, wobei Leitschaufeln eines vor dem Kühler angeordneten verstellbaren Luftleitgitters zur Regelung des Kühlluftstromes dienen. Durch den schräg oberhalb des Unterbodens angeordneten Kühler weist diese Anordnung jedoch eine sehr große Bauhöhe auf, welche die Einsatzmöglichkeit dieser Anordnung auf große Fahrzeuge mit ausreichend Platz hinter Vordersitzen beschränkt.

Ferner ist im US-Patent 3,770,049 bereits ein Kraftfahrzeug beschrieben, das hinter den Rädern im Bereich der Kotflügel angeordnete Wärmetauscher besitzt, die sich nach hinten bis unter den Boden des Kraftfahrzeugs erstrecken und verhindern sollen, daß es im Winter an diesen Stellen zu Eisanbackungen kommt. Die Wärmetauscher bestehen dort entweder aus mehreren Reihen von quer zur Fahrtrichtung angeordneten Rohren, die jeweils an beiden Stimenden mit einem der benachbarten Rohre verbunden sind, so daß ein durchgehender Kühlmittelpfad durch mäandrierende Rohre gebildet wird, oder alternativ aus zwei übereinander laminierten Blechen, die mit paarweise angeordneten Aufwölbungen versehen sind, durch welche das Kühlmittel hindurchströmt.

Jedoch weisen die bekannten Wärmetauscher zum einen eine relativ kleine Oberfläche auf und sind zum anderen überwiegend im Bereich der Kotflügel und im Windschatten hinter den Rädern angeordnet, wo sie selbst bei hohen Fahrtgeschwindigkeiten nur ungenügend vom Fahrtwind angeströmt werden, so dass die Wärmeübertragung ungenügend ist. Beispielsweise für eine Kraftstoffkühlung sind diese Wärmetauscher aufgrund des hohen Kühlungsbedarfs in sehr kurzer Zeit ungeeignet.

Aus der Schrift DE 38 00 296 A1 ist eine weitere Kühlvorrichtung für Kraftfahrzeuge bekannt, bei der die Kühlvorrichtung unter einem Fahrzeugboden jeweils nur eine Vorlaufleitung und eine Rücklaufleitung aufweist. Diese Vor- bzw. Rücklaufleitung weist dann jeweils einen Kühlkörper auf, der die jeweilige Leitung umgibt und so über die Leitungslänge einen Wärmeaustausch an die Umgebungsluft ermöglicht. Dabei weist diese bekannte Kühlvorrichtung den Nachteil auf, dass das zu kühlende Medium jeweils nur einmal durch die Kühlstrecke durchtritt, was die tatsächliche Kühlleistung erheblich begrenzt.

Die den nächstkommenden Stand der Technik zum Anmeldegegenstand bildende Schrift WO-A-94/23257 beschreibt einen gattungsbildenden Wärmetauscher, bei dem der Grundkörper und der Kühlkörper einstückig miteinander ausgebildet sind. Dies hat jedoch den Nachteil, dass das Herstellungsverfahren eines solchen Wärmetauschers sehr aufwendig ist.

Der vorliegenden Erfindung liegt daher die Aufgabe zugrunde, ein Kraftfahrzeug mit mindestens einem im Unterbodenbreich angeordneten Wärmetauscher der obengenannten Art zur Verfügung zu stellen, wobei die obengenannten Nachteile überwunden werden und eine stärkere Kühlung in entsprechend kürzerer Zeit erzielt wird.

Diese Aufgabe wird erfindungsgemäß durch ein Kraftfahrzeug der oben genannten Art mit den in Anspruch 1 gekennzeichneten Merkmalen gelöst.

Dazu ist es erfindungsgemäß vorgesehen, dass der Wärmetauscher aus einem Grundkörper mit wenigstens einem darin integral ausgebildeten Fluidkanal und einem separaten Kühlkörper besteht, der auf das Mittelelement aufgesetzt ist.

Dies hat den Vorteil, dass der Wärmetauscher kostengünstiger und schneller gefertigt und montiert werden kann.

Eine gute Durchströmung und hohe Kühlleistung wird dadurch erzielt, dass der Kühlkörper Kühlrippen aufweist, welche in Fahrtrichtung verlaufen und parallel zueinander angeordnet sind.

Zweckmäßigerweise ist zum Einhalten von Sicherheitsbestimmungen bezüglich der Temperatur eines in einen Kraftstofftank zurückfließenden Kraftstoffs der Wärmetauscher zum Kühlen des aus einer Einspritzvorrichtung in den Kraftstofftank rückfließenden Kraftstoffs in eine Kraftstoffrückflussleitung eingeschleift und der Fluidkanal ist dabei vorzugsweise ein Kraftstoffkanal.

In einer besonders vorteilhaften Ausführungsform ist der Grundkörper und/oder der Kühlkörper aus einem gut wärmeleitenden Material, wie beispielsweise einem Metall, insbesondere aus Aluminium oder einer Aluminiumlegierung, gefertigt.

Für eine längere Verweildauer des Fluids im Wärmetauscher und damit für eine niedrigere Ausflußtemperatur des Fluids aus dem Wärmetauscher durchzieht der Fluidkanal den Grundkörper in einer Ebene parallel zum Kühlkörper mäanderartig.

Für eine kostengünstige Massenfertigung ist der Grundkörper und/oder der Kühlkörper als Strangpreßprofil oder Stranggußprofil ausgebildet.

Ein einfacher und kostengünstiger Aufbau ergibt sich dadurch, daß der Grundkörper ein Mittelelement aufweist, welches als Strangpreßprofil oder Stranggußprofil ausgebildet ist und mehrere parallele Kanäle aufweist. Dabei ist bevorzugt an einem ersten offenen Ende des Mittelelementes ein erstes Abschlußelement und an einem zweiten offenen Ende des Mittelelementes ein zweites Abschlußelement angeordnet, welche auf das Mittelelement aufschiebbar ausgebildet sind und in denen jeweils mehrere nebeneinander angeordnete, in Aufschiebrichtung offene Kammern ausgebildet sind.

Als Zu- und Abflüsse, welche bei einer Montage lediglich an eine Fluidleitung angesteckt bzw. in diese eingeschleift werden müssen, sind wenigstens zwei Kammern des zweiten Abschlußelementes jeweils mit einer Anschlußöffnung versehen. Vorzugsweise sind dabei an den Anschlußöffnungen Leitungen vorgesehen, die in Anschlußstutzen enden.

Zum Schutz vor Steinschlag und Schmutz von der Fahrbahnseite ist von der dem Unterboden abgewandten Seite eine Abdeckung auf Anschlußöffnungen, Leitungen und/oder Anschlußstutzen aufgesetzt, welche vorzugsweise aus Kunststoff gefertigt ist.

In vorteilhafter Weise wird der Fluidkanal im Grundelement dadurch ausgebildet, daß die Kammern derart ausgebildet sind, daß diese bei aufgeschobenem ersten und zweiten Abschlußelement versetzt zu den Kanälen im Mittelelement angeordnet sind und an einem Ende jeweils wenigstens zwei Kanäle miteinander verbinden, wobei die Kammern des ersten Abschlußelementes versetzt zu den Kammern des zweiten Abschlußelementes angeordnet sind, so daß die Abschlußelemente und das Mittelelement wenigstens einen mäanderartigen Fluidkanal ausbilden. Durch dieses Baukastensystem ist ferner eine einfache und kostengünstige Herstellung und Montage möglich.

Zweckmäßigerweise ist für einen größtmöglichen Wärmeübergang von Fluid auf den Kühlkörper dieser auf das Mittelelement aufgesetzt.

Für eine Unterbodenmontage am Kraftfahrzeug ist auf einer dem Kühlkörper abgewandten Seite des Grundkörpers wenigstens ein Befestigungselement angeordnet, welches vorzugsweise zweischenkelig, insbesondere T-förmig ausgebildet ist, wobei ein Schenkel den Grundkörper umgreift und sich der zweite Schenkel über den Grundkörper hinaus erstreckt. Dabei weist der zweite Schenkel bevorzugt eine Öffnung zum Durchführen eines Befestigungselementes, wie beispielsweise einer Schraube, auf.

Weitere Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine Aufsicht eines Mittelelementes eines erfindungsgemäßen Wärmetauschers,
- Fig. 2: eine Schnittansicht des Mittelelementes von Fig. 1 entlang der Linie A - A in Fig. 1,
- Fig. 3: eine Aufsicht eines ersten Abschlußelementes eines erfindungsgemäßen Wärmetauschers,
- Fig. 4: eine Schnittansicht des ersten Abschlußelementes von Fig. 3 entlang der Linie A-A in Fig. 3,
- Fig. 5: eine Seitenansicht eines zweiten Abschlußelementes eines erfindungsgemäßen Wärmetauschers,
- Fig. 6: eine Aufsicht des zweiten Abschlußelementes von Fig. 5,
- Fig. 7: eine Schnittansicht des zweiten Abschlußelementes von Fig. 6 entlang der Linie A-A in Fig. 6,
- Fig. 8: eine Aufsicht eines Befestigungselementes eines erfindungsgemäßen Wärmetauschers,
- Fig. 9: eine Seitenansicht des Befestigungselementes von Fig. 8,
- Fig. 10: eine weitere Seitenansicht des Befestigungselementes von Fig. 8,
- Fig. 11: eine Seitenansicht von Zu- und Abflußleitungen eines erfindungsgemäßen Wärmetauschers,
- Fig. 12: eine Aufsicht der Zu- und Abflußleitungen von Fig. 11,
- Fig. 13: eine Schnittansicht eines Anschlußstutzens,
- Fig. 14: eine teilweise aufgeschnittene Aufsicht einer bevorzugten Ausführungsform eines erfindungsgemäßen Wärmetauschers,
- Fig. 15: eine Seitenansicht der bevorzugten Ausführungsform eines erfindungsgemäßen Wärmetauschers von Fig. 13 und
- Fig. 16: eine teilweise aufgeschnittene Seitenansicht eines erfindungsgemäßen Kraftfahrzeugs.

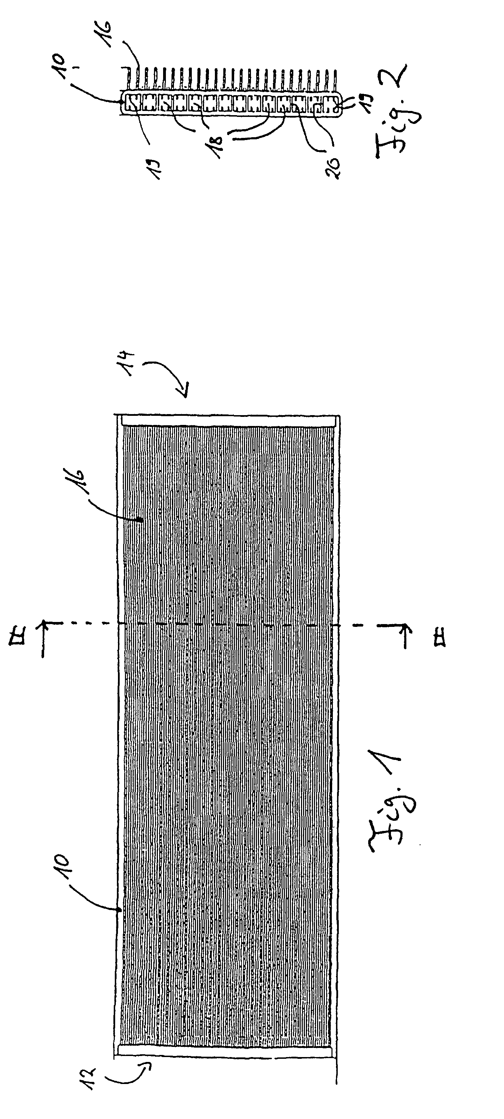

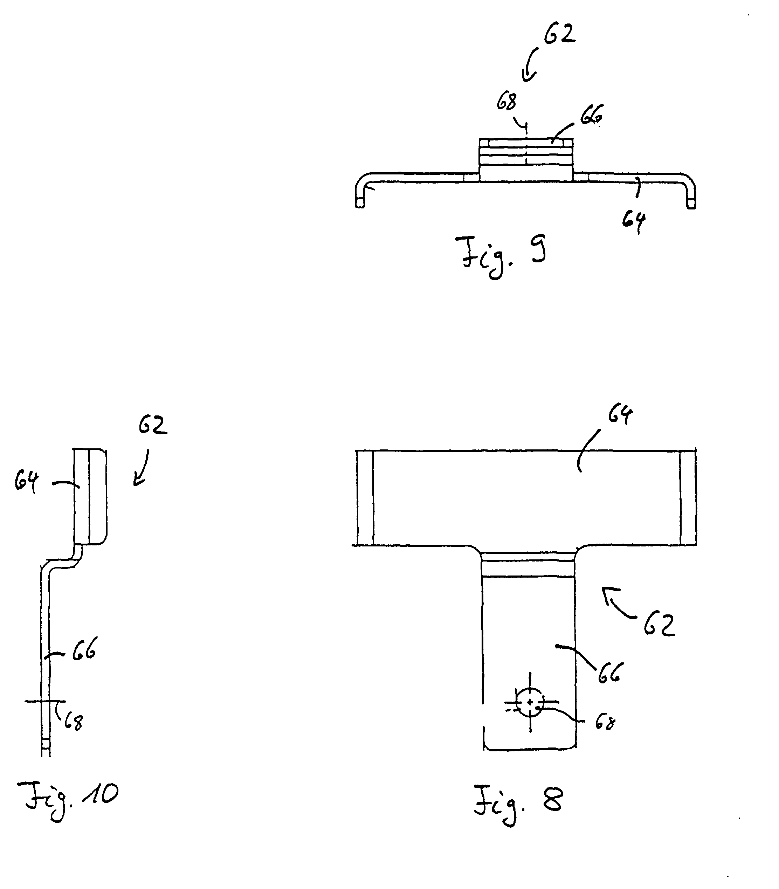

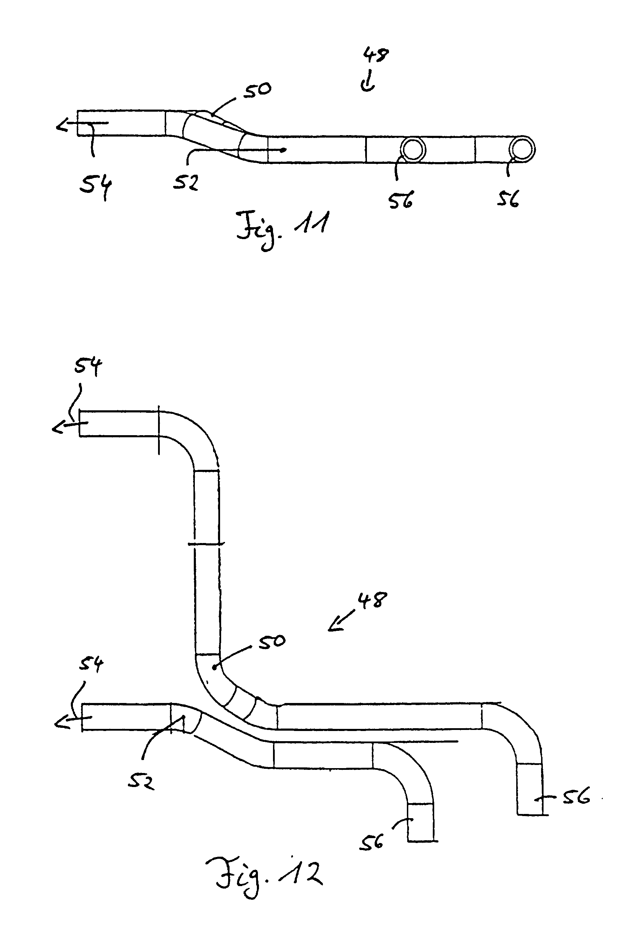

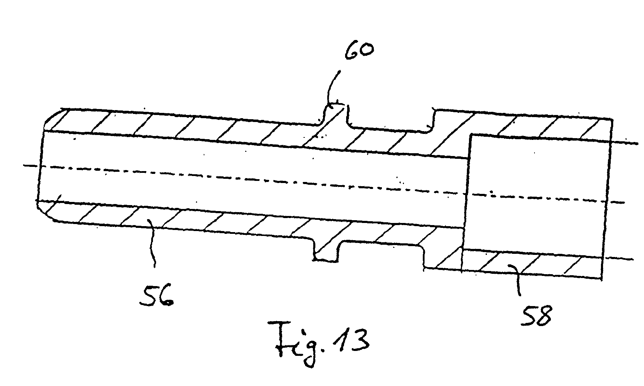

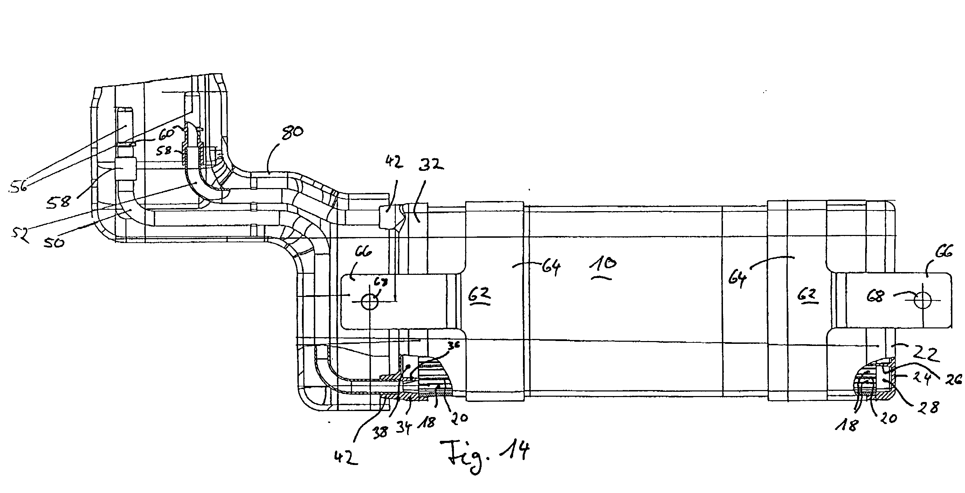

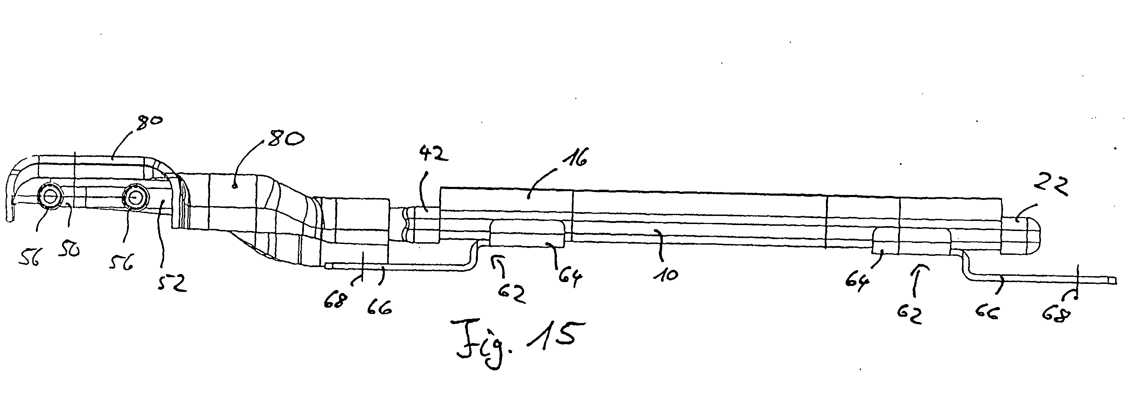

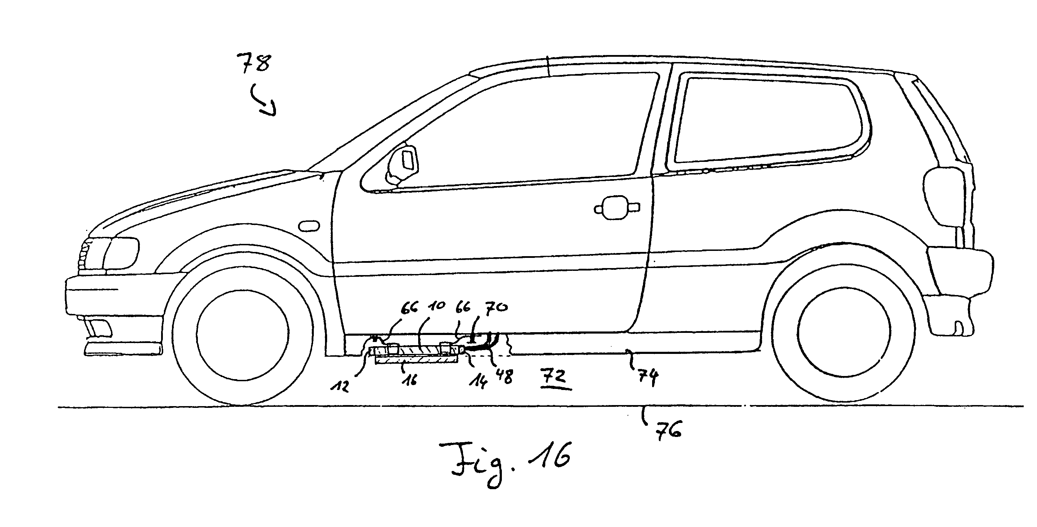

Unter Bezugnahme auf die Figuren 1 bis 13 werden zunächst die Einzelteile einer bevorzugten Ausführungsform eines erfindungsgemäßen Wärmetauschers bzw. Kraftstoffkühlers erläutert. Die Figuren 14 und 15 zeigen den Kraftstoffkühler in zusammengebautem Zustand und Fig. 16 veranschaulicht schließlich ein erfindungsgemäßes Kraftfahrzeug.

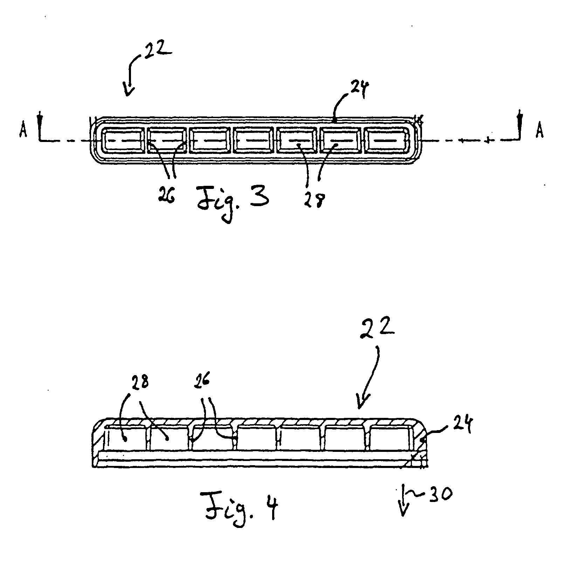

Das in Figur 1 dargestellte Mittelelement 10 ist vorzugsweise als ein Strangpreß- oder Stranggußprofil ausgebildet und umfaßt ein erstes offenes Ende 12 und ein zweites offenes Ende 14. Auf das Mittelelemten 10 ist ein Kühlkörper 16 mit Kühlrippen aufgesetzt und thermisch mit dem Mittelelement 10 verbunden, wie insbesondere aus Fig. 2 ersichtlich. Dies geschieht beispielsweise mittels hartlöten oder aufkleben. Im Mittelelement 10 sind integral im Strangpreß- oder Stranggußprofil Fluidkanäle 18 ausgebildet, die von Wandungen 20 abgetrennt werden und zu den Seiten 12 und 14 des Mittelelementes 10 hin offen sind.

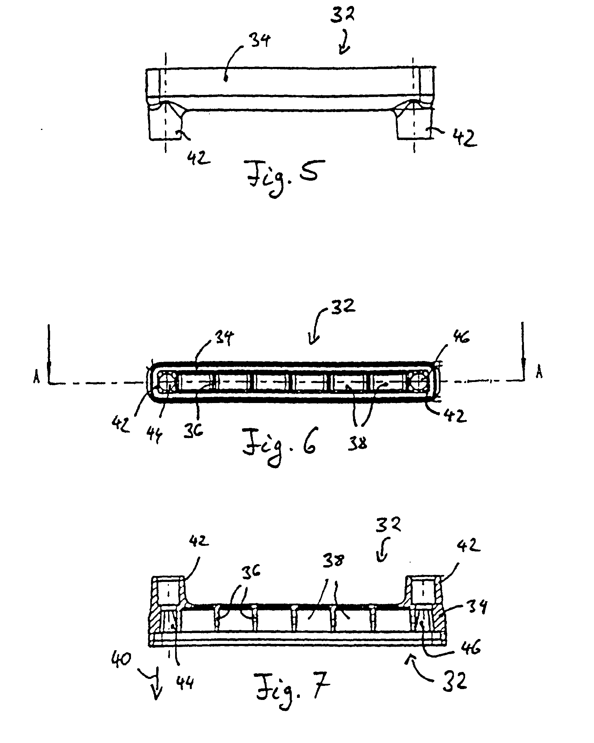

Seitlich auf das erste offene Ende 12 wird ein erstes Abschlußelement 22 aufgesetzt, welches in Fig. 3 und 4 dargestellt ist. Dieses erste Abschlußelement 22 umfaßt eine wannenförmige Wandung 24, welche in Richtung 30 (Fig. 4) auf das erste offene Ende 12 des Mittelelementes aufsteckbar ist. In der wannenförmigen Wandung 24 sind durch Wandungen 26 Kammern 28 ausgebildet. Die Kammern 28 sind in Aufsteckrichtung 30 offen und derart versetzt zu den Kanälen 18 im Mittelelement 10 angeordnet, daß eine Kammer 28 zwei Kanäle 18 miteinander verbindet und einen Fluidstrom entsprechend von einem Kanal 18 zu einem nächsten Kanal 18 weiterleitet.

Zusätzliche Erhebungen 19 in den Kanälen 18 erhöhen die Kontaktfläche zwischen Fluid im Kanal 18 und dem Mittelelement 10 und verbessern so den Wärmeübergang.

Figuren 5 bis 7 veranschaulichen ein zweites Abschlußelement 32, welches analog zum ersten Abschlußelement 22 eine wannenförmige Wandung 34 mit Wandungen 36 und Kammern 38 aufweist und in Aufsteckrichtung 40 (Fig. 7) auf das zweite offene Ende 14 des Mittelelementes 10 aufsteckbar ist. Wiederum verbindet je eine Kammer 38 zwei Kanäle 18 des Mittelelementes 10. Die Kammern 28 und 38 sind bei aufgestecktem ersten und zweiten Abschlußelement derart versetzt zueinander versetzt, daß sich ein mäanderartiger Verlauf des Fluidkanals 18 durch das Grundelement des Kraftstoffkühlers bestehend aus Mittelelement 10 und Abschlußelementen 22 und 32 ergibt.

Zusätzlich umfaßt das zweite Abschlußelement 32 Anschlußöffnungen 42, welche jeweils eine Kammer 44 und 46 nach Außen verbinden. An die Anschlußöffnungen wird ein in Figuren 11 und 12 dargestelltes Leitungssystem 48 mit Leitungen 50 und 52 angeschlossen, welche als Zu- bzw. Abfluß für den Fluidkanal 18 im Grundelement 10, 22, 32 dienen. Die Leitungen 50, 52 werden in Pfeilrichtung 54 an die Anschlußöffnungen 42 angeschlossen.

An gegenüberliegenden Enden der Leitungen 50 und 52 sind Anschlußstutzen 56 vorgesehen, welche bei der Montage des erfindungsgemäßen Kraftstoffkühlers zum Anschluß an das Kraftstoffleitungssystem des Kraftfahrzeugs dienen. An einer Seite hat der Anschlußstutzen 56 eine Hülse 58 zum Anschluß an Leitung 50 bzw. 52. An einer weiteren Stelle ist ein Anschlag 60 ausgebildet, zum definierten Aufschieben eines fahrzeugseitigen Anschlußmittels (nicht dargestellt) auf den Anschlußstutzen 56, so daß eine feste, sichere und dichte Verbindung zwischen dem Kraftstoffsystem des Kraftfahrzeugs und dem Kraftstoffkühler hergestellt ist.

Figuren 8 bis 10 zeigen ein Befestigungselement 62, welches zweischenkelig mit einem ersten Schenkel 64 und einem zweiten Schenkel 66 ausgebildet ist. Der erste Schenkel 64 umgreift U-förmig das Mittelelement 10 und ist beispielsweise mittels hartlöten fest mit diesem verbunden. Der zweite Schenkel 66 weist eine Öffnung 68 auf, durch welche ein Befestigungsmittel 70, wie beispielsweise eine Schraube, durchsteckbar und am Unterboden des Kraftfahrzeugs befestigbar bzw. einschraubbar ist. Dies ist in Fig. 16 dargestellt, wobei der erfindungsgemäße Kraftstoffkühler am Unterboden 74 des Kraftfahrzeugs 78 derart festgeschraubt ist, daß der Kühlkörper 16 in einen freien Raum 72 zwischen Unterboden 74 und Fahrbahn 76 übersteht. Dadurch liegt er direkt und ungestört im Fahrtwind und erhält eine optimale Kühlung ohne zusätzliche Aggregate.

Figuren 14 und 15 veranschaulichen den montierten erfindungsgemäßen Wärmetauscher mit den vorher in Bezug auf die Figuren 1 bis 13 beschriebenen Einzelteilen. Zusätzlich ist aus Figuren 14 und 15 eine Abdeckung 80 ersichtlich, welche die Leitungen 50 und 52 vor Steinschlag und Schmutz bzw. vor Beschädigungen schützt. Diese Abdeckung 80 ist vorzugsweise aus Kunststoff gefertigt und beispielsweise mittels entsprechender Schnappverbindungen an den Leitungen 50 und 52 gehaltert. Dies Halterungen können beispielsweise mittels Schrauben verspannt werden, so daß ein Lösen der Abdeckung 80 von den Leitungen 50, 52 verhindert ist.

Fig. 14 veranschaulicht ferner in zwei aufgeschnittenen Abschnitten die Verbindung zwischen Anschlußstutzen 56 und Leitungen 50, 52 sowie zwischen Leitungen 50 und 52 und den Anschlußöffnungen 42 im zweiten Abschlußelement 32. Ferner ist aus den aufgeschnittenen Teilen der Fig. 14 ersichtlich, wie eine Kammer 28 bzw. 38 der Abschlußelemente 22 und 32 zwei Kanäle 18 des Mittelelementes 10 miteinander verbindet, so daß ein mäanderartiger Flußverlauf des Fluidkanals 18 zustande kommt.

## Patentansprüche

1. Kraftfahrzeug, insbesondere Personenkraftwagen, mit mindestens einem im Unterbodenbereich (74) angeordneten Wärmetauscher, der aus einem Grundkörper (10, 22, 32) mit wenigstens einem darin integral ausgebildeten Fluidkanal (18) und einem Kühlkörper (16) besteht, der thermisch mit dem Grundkörper (10, 22, 32) verbunden ist und sich vom Unterboden (74) weg in einen freien Raum (72) zwischen Unterboden (74) und einer Fahrbahn (76) erstreckt, wobei der Grundkörper ein Mittelelement (10) aufweist, welches als Strangpressprofil oder Stranggussprofil ausgebildet ist und mehrere parallele Kanäle (18) aufweist, wobei an einem ersten offenen Ende (12) des Mittelelementes (10) ein erstes Abschlusselement (22) angeordnet ist, welches auf das Mittelelement (10) aufschiebbar ausgebildet ist und in dem mehrere nebeneinander angeordnete, in Aufschiebrichtung (30) offene Kammern (28) ausgebildet sind, **dadurch gekennzeichnet, dass** der Kühlkörper (16) als separates Bauteil ausgebildet und auf das Mittelelement (10) aufgesetzt ist.

2. Kraftfahrzeug nach Anspruch 1,
**dadurch gekennzeichnet, dass**
der Kühlkörper (16) Kühlrippen aufweist, welche in Fahrtrichtung verlaufen und parallel zueinander angeordnet sind.

3. Kraftfahrzeug nach Anspruch 1 oder 2,
**dadurch gekennzeichnet, dass**
der Wärmetauscher zum Kühlen von aus einer Einspritzvorrichtung in einen Kraftstofftank rückfließendem Kraftstoff in eine Kraftstoffrückflußleitung eingeschleift und der Fluidkanal (18) ein Kraftstoffkanal ist.

4. Kraftfahrzeug nach einem der vorhergehenden Ansprüche,
**dadurch gekennzeichnet, dass**
der Grundkörper (10, 22, 32) und/oder der Kühlkörper (16) aus einem gut wärmeleitenden Material, wie beispielsweise einem Metall, insbesondere Aluminium oder einer Aluminiumlegierung, gefertigt ist.

5. Kraftfahrzeug nach einem der vorhergehenden Ansprüche,
**dadurch gekennzeichnet, dass**
der Fluidkanal (18) den Grundkörper (10, 22, 32) in einer Ebene parallel zum Kühlkörper (16) mäanderartig durchzieht.

6. Kraftfahrzeug nach einem der vorhergehenden Ansprüche,
**dadurch gekennzeichnet, dass**
der Grundkörper (10, 22, 32) und/oder der Kühlkörper (16) als Strangpreßprofil oder Stranggußprofil ausgebildet ist.

7. Kraftfahrzeug nach Anspruch 5 oder 6,
**dadurch gekennzeichnet, dass**
an einem zweiten offenen Ende (14) des Mittelelementes (10) ein zweites Abschlußelement (32) angeordnet ist, welches auf das Mittelelement (10) aufschiebbar ausgebildet ist und in dem mehrere nebeneinander angeordnete, in Aufschiebrichtung (40) offene Kammern (38) ausgebildet sind.

8. Kraftfahrzeug nach Anspruch 7,
**dadurch gekennzeichnet, dass**
wenigstens zwei Kammern (44, 46) des zweiten Abschlußelementes (32) jeweils mit einer Anschlußöffnung (42) versehen sind.

9. Kraftfahrzeug nach Anspruch 8,
**dadurch gekennzeichnet, dass**
an den Anschlußöffnungen (42) Leitungen (50, 52) vorgesehen sind, die in Anschlußstutzen (56) enden.

10. Kraftfahrzeug nach einem der Ansprüche 8 oder 9,
**dadurch gekennzeichnet, dass**
von der dem Unterboden (74) abgewandten Seite eine Abdeckung (80) auf Anschlußöffnungen (42), Leitungen (50, 52) und/oder Anschlußstutzen (56) aufgesetzt ist.

11. Kraftfahrzeug nach Anspruch 10,
**dadurch gekennzeichnet, dass**
die Abdeckung (80) aus Kunststoff gefertigt ist.

12. Kraftfahrzeug nach einem der Ansprüche 6 bis 11,
**dadurch gekennzeichnet, dass**
die Kammern (28, 38) derart ausgebildet sind, dass diese bei aufgeschobenem Abschlußelement (22, 32) versetzt zu den Kanälen (18) im Mittelelement (10) angeordnet sind und an einem Ende (12, 14) jeweils wenigstens zwei Kanäle (18) miteinander verbinden.

13. Kraftfahrzeug nach einem der Ansprüche 6 bis 12,
**dadurch gekennzeichnet, dass**
die Kammern (28, 38) derart ausgebildet sind, dass bei aufgeschobenem ersten und zweiten Abschlußelement (22, 32) die Kammern (28) des ersten Abschlußelementes (22) versetzt zu den Kammern (38) des zweiten Abschlußelementes (32) angeordnet sind, so dass die Abschlußelemente (22, 32) und das Mittelelement (10) wenigstens einen mäanderartigen Fluidkanal (18) ausbilden.

14. Kraftfahrzeug nach einem der vorhergehenden Ansprüche,
**dadurch gekennzeichnet, dass**
auf einer dem Kühlkörper (16) abgewandten Seite des Grundkörpers (10, 22, 32) wenigstens ein, insbesondere zwei Befestigungselemente (62) zum Befestigen an einem Unterboden (74) des Kraftfahrzeuges (78) angeordnet sind.

15. Kraftfahrzeug nach einem der vorhergehenden Ansprüche,
**dadurch gekennzeichnet, dass**
das Befestigungselement (62) zweischenkelig, insbesondere T-förmig ausgebildet ist, wobei ein erster Schenkel (64) den Grundkörper (10, 22, 32), insbesondere das Mittelelement (10), umgreift und sich der zweite Schenkel (66) über den Grundkörper (10, 22, 32) hinaus erstreckt.

16. Kraftfahrzeug nach Anspruch 15,
**dadurch gekennzeichnet, dass**
der zweite Schenkel (66) eine Öffnung (68) zum Durchführen eines Befestigungselementes (70), wie beispielsweise einer Schraube, aufweist.

## Claims

1. Motor vehicle, in particular passenger car, having at least one heat exchanger which is arranged in the underbody regioh (74) and comprises a basic body (10, 22, 32) having at least one fluid duct (18) which is integrally formed therein, and a cooling body (16) which is connected thermally to the basic body (10, 22, 32) and extends away from the underbody (74) into a free space (72) between the underbody (74) and a carriageway (76), the basic body having a central element (10) which is designed as an extruded profile or continuous cast profile and has a plurality of parallel ducts (18), a first closing element (22) being arranged at a first, open end (12) of the central element (10) and being designed such that it can be pushed onto the central element (10) and in which a plurality of chambers (28) which are arranged next to one another and are open in the push-on direction (30) are formed, **characterized in that** the cooling body (16) is designed as a separate component and is placed onto the central element (10).

2. Motor vehicle according to Claim 1, **characterized in that** the cooling body (16) has cooling ribs which run in the direction of travel and are arranged parallel to one another.

3. Motor vehicle according to Claim 1 or 2, **characterized in that** the heat exchanger is connected into a fuel return line in order to cool fuel flowing back from an injection device into a fuel tank, and the fluid duct (18) is a fuel duct.

4. Motor vehicle according to one of the preceding claims, **characterized in that** the basic body (10, 22, 32) and/or the cooling body (16) is manufactured from a material, for example a metal, in particular aluminium or an aluminium alloy, which readily conducts heat.

5. Motor vehicle according to one of the preceding claims, **characterized in that** the fluid duct (18) passes in a meandering manner through the basic body (10, 22, 32) in a plane parallel to the cooling body (16).

6. Motor vehicle according to one of the preceding claims, **characterized in that** the basic body (10, 22, 32) and/or the cooling body (16) is designed as an extruded profile or continuous cast profile.

7. Motor vehicle according to Claim 5 or 6, **characterized in that** a second closing element (32) is arranged at a second, open end (14) of the central element (10) and is designed such that it can be pushed onto the central element (10) and in which a plurality of chambers (38) which are arranged next to one another and are open in the push-on direction (40) are formed.

8. Motor vehicle according to Claim 7, **characterized in that** at least two chambers (44, 46) of the second closing element (32) are provided in each case with a connecting opening (42).

9. Motor vehicle according to Claim 8, **characterized in that** lines (50, 52) which end in connecting branches (56) are provided at the connecting openings (42).

10. Motor vehicle according to either of Claims 8 and 9, **characterized in that** a cover (80) is placed from the side facing away from the underbody (74) onto connecting openings (42), lines (50, 52) and/or connecting branches (56).

11. Motor vehicle according to Claim 10, **characterized in that** the cover (80) is manufactured from plastic.

12. Motor vehicle according to one of Claims 6 to 11, **characterized in that** the chambers (28, 38) are designed in such a manner that, when the closing element (22, 32) is pushed on, the said chambers are offset with respect to the ducts (18) in the central element (10) and in each case connect at least two ducts (18) to each other at an end (12, 14).

13. Motor vehicle according to one of Claims 6 to 12, **characterized in that** the chambers (28, 38) are designed in such a manner that when the first and second closing elements (22, 32) are pushed on the chambers (28) of the first closing element (22) are offset with respect to the chambers (38) of the second closing element (32), so that the closing elements (22, 32) and the central element (10) form at least one meandering fluid duct (18).

14. Motor vehicle according to one of the preceding claims, **characterized in that** at least one, in particular two fastening elements (62) for fastening to an underbody (74) of the motor vehicle (78) are arranged on a side of the basic body (10, 22, 32) that faces away from the cooling body (16).

15. Motor vehicle according to one of the preceding claims, **characterized in that** the fastening element (62) is of two-limbed, in particular T-shaped design, a first limb (64) engaging around the basic body (10, 22, 32), in particular the central element (10), and the second limb (66) extending beyond the basic body (10, 22, 32).

16. Motor vehicle according to Claim 15, **characterized in that** the second limb (66) has an opening (68) for passing a fastening element (70), for example a screw, through.

## Revendications

1. Véhicule automobile, en particulier voiture particulière avec au moins un échangeur de chaleur disposé dans la zone sous le plancher (74), lequel se compose d'un corps de base (10, 22, 32) avec au moins un canal à fluides (18) intégralement formé à l'intérieur et d'un radiateur (16) en liaison thermique avec le corps de base (10, 22, 32) et qui s'étend en partant du dessous du plancher (74) dans un espace (72) libre entre le dessous du plancher (74) et une voie de circulation (76), où le corps de base présente un élément de milieu (10) réalisé en tant que profilé filé ou profilé coulé et présentant plusieurs canaux (18) parallèles, moyennant quoi un premier élément terminal (22) est disposé sur une première extrémité ouverte (12) de l'élément de milieu (10), lequel élément terminal est formé de manière à pouvoir être enfilé sur l'élément de milieu (10) et dans lequel sont formés plusieurs logements (28) disposés les uns à côté des autres et ouverts dans la direction d'enfilage (30), **caractérisé en ce que** le radiateur (16) est réalisé en tant qu'élément de construction distinct et est placé sur l'élément de milieu (10).

2. Véhicule automobile selon la revendication 1, **caractérisé en ce que** le radiateur (16) présente des ailettes de radiateur s'étendant dans la direction de conduite et disposées parallèlement les unes par rapport aux autres.

3. Véhicule automobile selon l'une quelconque des revendications 1 ou 2, **caractérisé en ce que** l'échangeur de chaleur pour refroidir du carburant refluant d'un dispositif d'injection vers un réservoir de carburant est mis en boucle avec une conduite de retour du carburant, et **en ce que** le canal à fluides (18) est un canal à carburant.

4. Véhicule automobile selon l'une quelconque des revendications précédentes, **caractérisé en ce que** le corps de base (10, 22, 32) et/ou le radiateur (16) est fabriqué en un matériau conduisant bien la chaleur tel par exemple un métal, en particulier de l'aluminium ou un alliage à base d'aluminium.

5. Véhicule automobile selon l'une quelconque des revendications précédentes, **caractérisé en ce que** le canal à fluides (18) parcoure le corps de base (10, 22, 32) en formant des méandres sur un plan parallèle au radiateur (16).

6. Véhicule automobile selon l'une quelconque des revendications précédentes, **caractérisé en ce que** le corps de base (10, 22, 32) et/ou le radiateur (16) est réalisé en tant que profilé filé ou profilé coulé.

7. Véhicule automobile selon l'une quelconque des revendications 5 ou 6, **caractérisé en ce qu'**un deuxième élément terminal (32) est disposé sur une deuxième extrémité ouverte (14) de l'élément de milieu (10), lequel élément terminal est conçu de manière à pouvoir être enfilé sur l'élément de milieu (10) et dans lequel sont formés plusieurs logements (38) disposés les uns à côté des autres et ouverts dans la direction d'enfilage (40).

8. Véhicule automobile selon la revendication 7, **caractérisé en ce qu'**au moins deux logements (44, 46) du deuxième élément terminal (32) sont respectivement pourvus d'une ouverture de raccordement (42).

9. Véhicule automobile selon la revendication 8, **caractérisé en ce que** des conduites (50, 52) sont prévues aux ouvertures de raccordement (42) lesquelles se terminent dans des raccords (56).

10. Véhicule automobile selon l'une quelconque des revendications 8 ou 9, **caractérisé en ce que** depuis le côté opposé au dessous du plancher (74), un couvercle (80) est posé sur les ouvertures de raccordement (42), les conduites (50, 52) et/ou les raccords (56).

11. Véhicule automobile selon la revendication 10, **caractérisé en ce que** le couvercle (80) est fabriqué en matière synthétique.

12. Véhicule automobile selon l'une quelconque des revendications 6 à 11, **caractérisé en ce que** les logements (28, 38) sont conçus de manière à être disposés de manière décalée par rapport aux canaux (18) dans l'élément de milieu (10) lorsque l'élément terminal (22, 32) est enfilé, et relient respectivement au moins deux canaux (18) entre eux à une extrémité (12, 14).

13. Véhicule automobile selon l'une quelconque des revendications 6 à 12, **caractérisé en ce que** les logements (28, 38) sont conçus de manière à ce que, lorsque le premier et le deuxième élément terminal (22, 32) sont enfilés, les logements (28) du premier élément terminal (22) sont disposés de manière décalée par rapport aux logements (38) du deuxième élément terminal (32), de sorte que les éléments terminaux (22, 32) et l'élément de milieu (10) forment au moins un canal à fluides (18) formant des méandres.

14. Véhicule automobile selon l'une quelconque des revendications précédentes, **caractérisé en ce que** sur un côté du corps de base (10, 22, 32) opposé au radiateur (16) au moins un, et en particulier deux éléments de fixation (62) sont disposés pour la fixation sur le dessous du plancher (74) du véhicule automobile (78).

15. Véhicule automobile selon l'une quelconque des revendications précédentes, **caractérisé en ce que** l'élément de fixation (62) est réalisé avec deux branches et en particulier en forme de T, où une première branche (64) entoure le corps de base (10, 22, 32) et en particulier l'élément de milieu (10), et où la deuxième branche (66) s'étend au-delà du corps de base (10, 22, 32).

16. Véhicule automobile selon la revendication 15, **caractérisé en ce que** la deuxième branche (66) présente une ouverture (68) pour faire passer un élément de fixation (70) tel par exemple une vis.
